# EUROPÄISCHE PATENTSCHRIFT

(11) **EP 1 175 722 B1**
(45) Veröffentlichungstag und Bekanntmachung des Hinweises auf die Patenterteilung: **23.01.2008**
(21) Anmeldenummer: 00989776.0
(22) Anmeldetag: 14.11.2000
(51) Int. Cl.: H02K 7/116

(54) **ELEKTRISCHE ANTRIEBSEINHEIT**
ELECTRIC DRIVE UNIT
UNITE D'ENTRAINEMENT ELECTRIQUE

(30) Priorität: 16.11.1999 DE 19954966
(43) Veröffentlichungstag der Anmeldung: 30.01.2002
(73) Patentinhaber: ROBERT BOSCH GMBH, 70442 Stuttgart (DE)
(72) Erfinder: LAUK, Detlef, D-77871 Renchen (DE)
(86) Internationale Anmeldenummer: PCT/DE2000/004020
(87) Internationale Veröffentlichungsnummer: WO 2001/037399

(56) Entgegenhaltungen:
- WO-A-98/10971
- GB-A- 1 596 374
- US-A- 4 572 979
- US-A- 5 184 039

## Beschreibung

### Stand der Technik

Die Erfindung geht aus von einer elektrischen Antriebseinheit nach der Gattung des Anspruchs 1.

Aus der DE 32 35 622 A1 bzw. US-PS 4,572,979 ist ein Aufbau einer elektrischen Antriebseinheit bekannt. Sie besteht u. a. aus einem elektrischen Motor mit Stator und Magnet in einem Polgehäuse, einem Rotor mit Anker und einem Getriebe in einem Getriebegehäuse. Polgehäuse und Getriebegehäuse sind miteinander verbunden, wodurch die Anzahl zu montierender Teile und der Fertigungsaufwand groß ist.
Das Getriebegehäuse ist dabei aus Kunststoff gefertigt.
Nach dem Stand der Technik hat das Motorgehäuse ein Rückschlußelement oder ist ein Polgehäuse, das die Form eines Bechers aus einem magnetisch leitenden Material hat und so als Rückschlußelement dient. In beiden Fällen werden in das Gehäuse zwei innenliegende Magnethalbschalen montiert. Diese werden in dem Polgehäuse teilweise durch Haltefedern fixiert und/oder werden wegen der auftretenden Vibrationen und zusätzlich zur Geräuschverringerung zwischen Magneten und Polgehäuse geklebt.

Der Poltopfboden beinhaltet ein Zylinder- oder Kalottenlager, welches für eine Lagerung des Rotors als Radiallager dient. Diese Teile aus Elektromotor, Magneten, Lager existieren nach der Fertigung als separate Komponenten oder Baugruppe, die mit dem Getriebegehäuse durch Schrauben oder Verstemmen verbunden werden müssen.
Oft wird zur Reduzierung des Ankerlängsspiels noch ein Abstandshalter zwischen einem stirnseitigen Ende des Rotors und einem Lager im Polgehäuse angebracht, um Toleranzen von Rotor und Polgehäuse auszugleichen.
Aus der DE 43 20 005 A1 bzw. US-PS 5,895,207 ist schon bekannt, das Polgehäuse einer elektrischen Antriebseinheit aus Kunststoff zu fertigen und daß die Magnete in dem Kunststoff gehalten werden. Jedoch werden Getriebegehäuse und Polgehäuse zusammengeschraubt.
Aus der DE 197 24 920 A1 ist schon bekannt, einen Motor und einen wesentlichen Teil des Getriebes in einem Gehäuse, in dem auch der Motor sich befindet, unterzubringen. Ein separates Getriebegehäuse ist aber immer noch notwendig. Außerdem enthält diese Schrift keine Informationen darüber, wie der Motor in dem Gehäuse untergebracht ist und aus welchem Material das Gehäuse ist.

Weiters ist aus der US-A-5 184 039 eine elektrische Antriebseinheit mit den Merkmalen des Oberbegriffs des Anspruchs 1 bekannt.

### Vorteile der Erfindung

Die erfindungsgemäße elektrische Antriebseinheit mit den kennzeichnenden Merkmalen des Anspruchs 1 hat demgegenüber den Vorteil, daß auf einfache Art und Weise die Anzahl zu montierender Teile und der Fertigungsaufwand reduziert wird.

Durch die in den abhängigen Ansprüchen aufgeführten Maßnahmen sind vorteilhafte Weiterbildungen und Verbesserungen der im Anspruch 1 genannten elektrischen Antriebseinheit möglich.

Vorteilhaft ist die Verwendung von Kunststoff für das Gehäuse, da dadurch wasserdichte Pol- und Getriebegehäuse hergestellt werden können und eine Gewichtsreduzierung der Antriebseinheit erzielt wird.

Besonders vorteilhaft ist es, Magnete und/oder ein Rückschlußelement und/oder ein Ankerlager in das Polgehäuse einzuspritzen, da dadurch der Fertigungsaufwand und die Anzahl zu montierender Teile reduziert wird.

Die Verwendung eines einstückigen Rückschlußelements hat Vorteile, weil es die Anzahl der zu montierenden Teile reduziert.

Weiterhin ist es vorteilhaft, bei Korrosionsproblemen das Rückschlußelement außen mit Kunststoff zu umspritzen.

Durch Form- und Kraftschluß kann auf vorteilhafte Weise der zumindest eine Magnet oder das Rückschlußelement in dem Polgehäuse befestigt werden, so daß keine weiteren Sicherungselemente notwendig sind.

Vorteilhaft ist es, das Ankerlängsspiel durch Einsetzen eines Lagerschilds mit dem Motorlager nach dem Einbau einer Welle sehr gering zuhalten.

### Zeichnung

Ausführungsbeispiele der Erfindung sind in der Zeichnung vereinfacht dargestellt und in der nachfolgenden Beschreibung näher erläutert.

Es zeigen
Figur 1 ein erstes Ausführungsbeispiel einer erfindgungsgemäß ausgebildeten Antriebseinheit,
Figur 2 a - e mehrere Möglichkeiten den zumindest einen Magneten und das Rückschlußelement in das Polgehäuse zu integrieren.

### Beschreibung der Ausführungsbeispiele

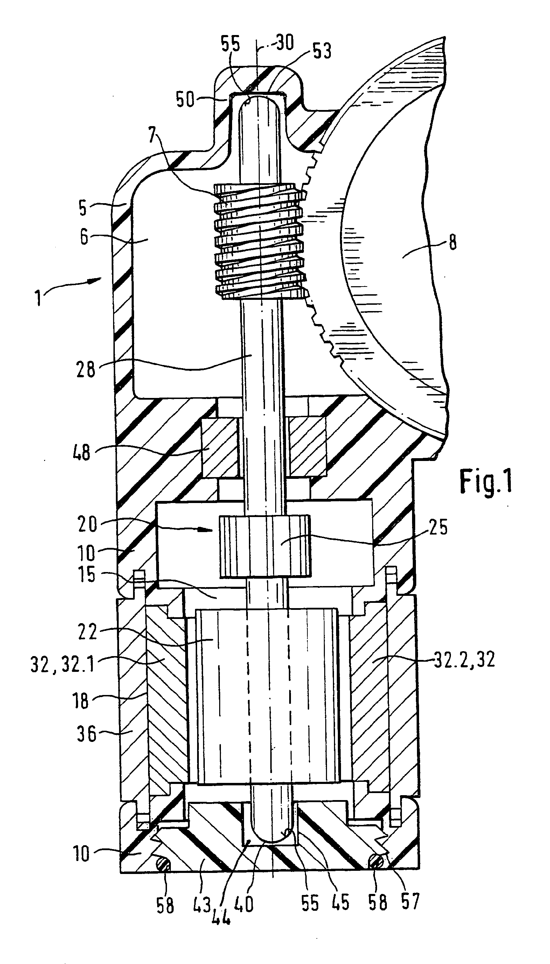

Figur 1 zeigt ein erstes Ausführungsbeispiel einer erfindungsgemäßen elektrischen Antriebseinheit 1.
Die elektrische Antriebseinheit 1 besteht aus einem Getriebegehäuse 5 und einem Polgehäuse 10. Das Getriebegehäuse 5 geht ohne zusätzliche Verbindung in das Polgehäuse 10 über, wobei das Getriebegehäuse 5 auch mehrteilig sein kann. So bilden bspw. ein nicht dargestellter Deckel und ein Boden 6 das Getriebegehäuse 5. Der Einbau eines Getriebes, eventuell der Einbau eines Lagers in das Getriebegehäuse 5 wird so durch die spätere Montage des Deckels ermöglicht. Der Boden 6 des Getriebegehäuses 5 ist in diesem Beispiel mit dem Polgehäuse 10 einteilig. Das Getriebegehäuse 5 und das Polgehäuse 10 können aus Kunststoff oder Metall sein. Wenn ein Gehäuse 5, 10 aus Kunststoff besteht, so wird es bspw. durch Kunststoffspritzen oder -gießen hergestellt. Ein Polgehäuse 10 aus Kunststoff kann auch an ein Getriebegehäuse 5 aus Metall angespritzt werden, so daß jede Materialkombination für die Gehäuse 5, 10 möglich ist. In dem Getriebegehäuse 5 befindet sich bspw. ein Schneckenantrieb 7 mit einem nicht weiter dargestellten Getriebe 8.

In dem Polgehäuse 10 befindet sich ein elektrischer Motor 15. Der elektrische Motor 15 besteht aus einem Stator 18 und einem Rotor 20. Der Rotor 20 wird gebildet aus einem Anker 22, einem Kommutator 25 und einer Welle 28. Die Welle 28 hat eine axiale Längsachse 30.
Der Stator 18 besteht aus bspw. zwei Magneten 32.1 , 32.2 und einem Rückschlußelement 36. Der Magnet 32 kann einteilig oder aus mehreren Teilen 32.1, 32.2 bestehen.
Das Rückschlußelement 36 kann bspw. aus bspw. zwei Stahlhalbschalen oder einstückig bspw. aus einem Stahlring bestehen und so den magnetischen Rückschluß für die Magnete 32 bilden. Das Rückschlußelement 36 kann aus jedem magnetisch leitenden Material hergestellt sein.
Dabei kann es sich auch um ein Gemisch aus Kunststoff und einem magnetisch leitenden Material handeln, das in das Polgehäuse 10 eingespritzt ist.
Der zumindest eine Magnet 32 und das Rückschlußelement 36 sind in das Polgehäuse 10 integriert.

Die Welle 28 ist an zumindest zwei Stellen gelagert. An einem motorseitigen Ende 40 der Welle 28 ist ein noch zunächst axial verstellbares Lagerschild 43 mit einem Motorlager 45 vorhanden. Das Lagerschild 43 und das Motorlager 45 können einteilig ausgebildet sein und bspw. aus Kunststoff sein. Das Lagerschild 43 kann auch aus einem kunststoffumspritzten metallischen Motorlager 45 bestehen. In dem Polgehäuse 10 ist bspw. eine Vertiefung 44 vorgesehen, in der das Lagerschild 43 einbringbar ist.
In Richtung Getriebegehäuse gesehen nach dem elektrischen Motor 15 und hier bspw. nach dem Kommutator 25 befindet sich ein Ankerlager 48, das bspw. in das Polgehäuse 10 eingespritzt ist. Ein weiteres Lager, ein sogenanntes Getriebelager 50, befindet sich an einem getriebeseitigen Ende 53 der Welle 28 im Getriebegehäuse 5. Das getriebeseitige Ende 53 und das motorseitige Ende 40 der Welle 28 sind bspw. als Anlaufkuppe 55 ausgeformt.

Bei der Herstellung der elektrischen Antriebseinheit 1 werden bspw. Magnete 32 und Rückschlußelemente 36 in ein Spritzwerkzeug eingelegt und dann durch Einspritzen von plastifiziertem Kunststoff in das Spritzwerkzeug der Boden 6 des Getriebegehäuses 5 und das Polgehäuse 10 gebildet.
Nach der Montage des Rotors 20, des Getriebes 8 usw. wird das Lagerschild 43 mit dem Motorlager 45 in das Polgehäuse 10 so in axialer Richtung eingebracht, daß ein minimales Ankerlängsspiel vorhanden ist. Ausgleichsscheiben wegen Toleranzen von Welle und Gehäuse sind nicht notwendig.
Das Lagerschild 43 kann bspw. in ein in dem Polgehäuse 10 vorhandenen Gewinde 57 eingeschraubt werden, durch eine Kleberaupe 58 verklebt werden, durch Ultraschallschweißen oder Lasern mit dem Polgehäuse 10 verbunden werden. Dies ergibt eine wasserdichte Verbindung.

Bei geeigneter Stoffwahl des Lagerschildes 43 kann das Motorlager 45 neben der radialen Lagerung auch die axialen Anlaufkräfte des Rotors 20 aufnehmen. Darüber hinaus kann das Lagerschild 43 mit dem Motorlager 45 axial mit leichter Vorspannkraft gegen eine Stählanlaufkuppe 55 der Welle 28 gedrückt und in einem axial spielfreien Zustand der Welle 28 an dem Polgehäuse 10 fixiert werden.

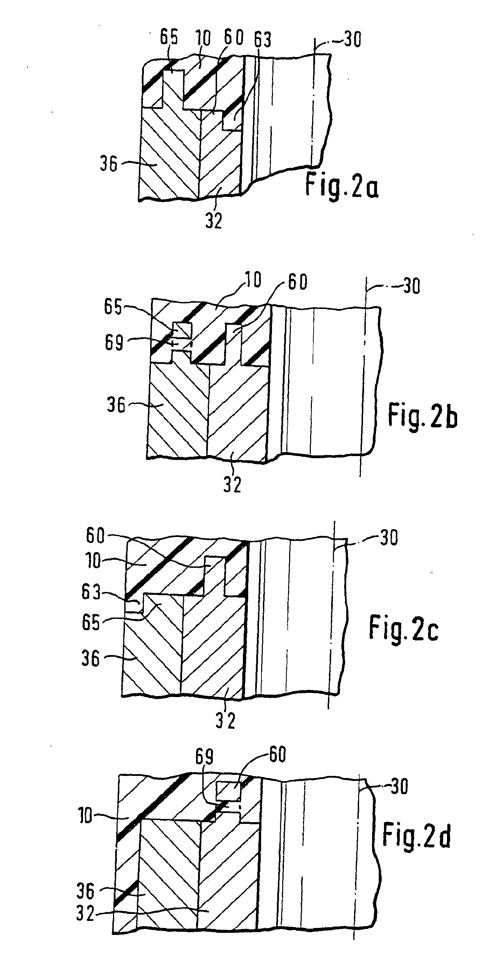

Die Figuren 2a bis 2e zeigen mehrere Möglichkeiten den zumindest einen Magneten 32 und das Rückschlußelement 36 in das Polgehäuse 10 zu integrieren. Für gleiche oder gleichwirkende Teile werden die gleichen Bezugszeichen wie in Figur 1 verwendet.

In Figur 2a ist gezeigt, daß der Magnet 32 einen ersten Vorsprung 60 hat, der an einem dem Rotor 20 zugewandten zweiten Vorsprung 63 des Polgehäuses 10 anliegt und so mit dem Kunststoff einen Formschluß bildet. Das Polgehäuse 10 ist um einen dritten Vorsprung 65 des Rückschlußelements 36 bspw. angespritzt, wodurch es in dem Polgehäuse 10 befestigt ist.
Die anderen Enden des Magneten 32 und des Rückschlußelements 36 sind ähnlich ausgebildet und vom Polgehäuse 10 umschlossen. Rückschlußelement 36 und Magnet 32 liegen dicht aufeinander, so daß ein Kraftschluß für den Magneten 32 entsteht und dieser an dem zweiten Vorsprung 63 des Polgehäuses 10 gehalten wird.

Figur 2b zeigt den Magneten 32 mit einem ersten Vorsprung 60, der wie bei dem Rückschlußelement 36 in Figur 2a in das Polgehäuse 10 hineinragt und vom Kunststoff umschlossen ist. Das Rückschlußelement 36 hat in seinem vom Kunststoff umschlossenen dritten Vorsprung 65 eine Öffnung 69, in die Kunststoff bspw. bei einem Spitzenvorgang eindringt und so das Rückschlußelement 36 zusätzlich in dem Polgehäuse 10 sichert. Ein zusätzlicher Kraftschluß für den Magneten 32 oder das Rückschlußelement 36 ist in diesem Beispiel nicht notwendig.

In Figur 2c liegt das Rückschlußelement 36 mit seinem dritten Vorsprung 65 auf einer Seite an einem zweiten Vorsprung 63 am Umfang des Polgehäuses 10 an, so daß es mit dem Kunststoff einen Formschluß bildet. Der Magnet 32 hat einen ersten Vorsprung 60, der in das Polgehäuse 10 hineinragt und das Rückschlußelement 36 durch Kraftschluß radial sichert.

Figur 2d zeigt, wie das Polgehäuse 10 am Umfang das Rückschlußelement 36 außen bspw. vollständig umschließt und daß das Rückschlußelement 36 keinen Vorsprung hat und durch das Polgehäuse 10 in Formschluß und durch den Magneten 32 durch Kraftschluß in seiner Lage befestigt ist. Der Magnet 32 ist wie in Figur 2b mit dem ersten Vorsprung 60 in dem Polgehäuse 10 eingespritzt und in dem ersten Vorsprung 60 mit einer Öffnung 69 versehen.

Die Vorsprünge 60, 63, 65 erstrecken sich komplett oder teilweise radial umlaufend auf wenigstens einer Stirnfläche des Magneten 32 oder Rückschlußelements 36.

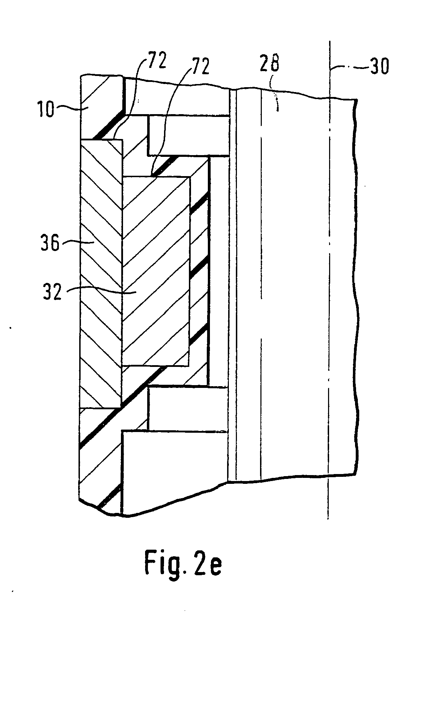

Das Polgehäuse 10 kann auch direkt ohne Einspritzen des Magneten 32 und des Rückschlußelements 36 hergestellt werden. Das Polgehäuse hat dann, wie in Figur 2e dargestellt, beispielsweise in gestufter Weise entsprechende Senken 72, in die der Magnet 32 und das Rückschlußelement 36 übereinanderliegend eingesetzt und befestigt werden. Der Kunststoff des Polgehäuses 10 umschließt den Magneten 32 und das Rückschlußelement 36 vollständig zum Rotor 20 hin. Ein minimaler Abstand zwischen Anker 20 und Magnet 32 wird dadurch vergrößert.

In den Figuren 2a,b,c,e liegt das Rückschlußelement 36 zur besseren Wärmeabstrahlung nach außen hin frei. Soll eine Korrosion vermieden werden, so geschieht dies entweder durch entsprechende Materialwahl oder wie in Figur 2d durch äußeres Umspritzen des Rückschlußelements 36.

Um eine gute und dichte Anbindung des/der Rückschlußelemente 36 zum Polgehäuse 10 zu erreichen, kann ein entsprechender Randbereich der Rückschlußelemente 36 bspw. gelöchert oder verrippt ausgeführt werden. Vibrationen zwischen Magnet 32 und Rückschlußelement 36 können nicht auftreten, da sowohl Magnet 32 und/oder Rückschlußelement 36 fest in das Polgehäuse eingespritzt oder darin befestigt sind.

Generell eignet sich der beschriebene Aufbau zur Realisierung von wasserdichten elektrischen Antriebseinheiten, denn das ohnehin dichte Kunststoffgetriebegehäuse kann auch getriebeseitig mit einem Kunststoffdeckel wasserdicht verschweißt werden.

## Patentansprüche

1. Elektrische Antriebseinheit (1), insbesondere für Antriebe in einem Kraftfahrzeug,
mit einem Elektromotor (15), der einen Rotor (20) mit einer Welle (28) und ein Polgehäuse (10) aufweist,
wobei das Polgehäuse (10) zumindest einen Magnet (32) und ein Rückschlußelement (36) enthält,
mit einem Lagerschild (43), das ein Motorlager (45) für den Rotor (20) enthält,
mit einem ein- oder mehrteiligen Getriebegehäuse (5), das mit dem Polgehäuse (10) verbunden ist,
wobei das Polgehäuse (10) mit zumindest einem Teil des Getriebegehäuses (5) einteilig ist,
**dadurch gekennzeichnet,**
**dass** das Lagerschild (43) ein Teil des Polgehäuses (10) ist, und dass der zumindest eine Magnet (32) zumindest teilweise direkt an dem Polgehäuse (10) anliegt und zumindest teilweise unmittelbar durch das Polgehäuse (10) gehalten ist.

2. Elektrische Antriebseinheit nach Anspruch 1,
**dadurch gekennzeichnet, daß**
das Polgehäuse (10) zumindest teilweise aus Kunststoff besteht.

3. Elektrische Antriebseinheit nach Anspruch 1 oder 2,
**dadurch gekennzeichnet, daß**
in das Polgehäuse (10) der zumindest eine Magnet (32) zumindest teilweise eingespritzt ist.

4. Elektrische Antriebseinheit nach einem oder mehreren der Ansprüche 1 bis 3,
**dadurch gekennzeichnet, daß**
in das Polgehäuse (10) das für den zumindest einen Magnet (32) einen Rückschluß bildende Rückschlußelement (36) zumindest teilweise eingespritzt ist.

5. Elektrische Antriebseinheit nach einem oder mehreren der Ansprüche 1 oder 4,
**dadurch gekennzeichnet, daß**
das Rückschlußelement (36) aus zumindest zwei Schalen besteht.

6. Elektrische Antriebseinheit nach einem oder mehreren der Ansprüche 1 oder 4,
**dadurch gekennzeichnet, daß**
das Rückschlußelement (36) einstückig ausgebildet ist.

7. Elektrische Antriebseinheit nach einem oder mehreren der Ansprüche 1, 2 oder 4 bis 6,
**dadurch gekennzeichnet, daß**
in das Polgehäuse (10) das Rückschlußelement (36), bestehend aus einem Gemisch aus Kunststoff und magnetisch leitendem Material, eingespritzt ist.

8. Elektrische Antriebseinheit nach einem oder mehreren der Ansprüche 4 bis 7,
**dadurch gekennzeichnet, daß**
das Rückschlußelement (36) einen Vorsprung (65) hat, der von dem Kunststoff des Polgehäuses (10) umschlossen ist.

9. Elektrische Antriebseinheit nach Anspruch 1 oder 3,
**dadurch gekennzeichnet, daß**
der zumindest eine Magnet (32) einen Vorsprung (60) hat, der von dem Kunststoff des Polgehäuses (10) umschlossen ist.

10. Elektrische Antriebseinheit nach einem oder mehreren der Ansprüche 1, 2 oder 4 bis 8,
**dadurch gekennzeichnet, daß**
in dem Polgehäuse (10) der zumindest eine Magnet (32) durch Formschluß im Kunststoff des Polgehäuses (10) und durch Kraftschluß des radial gesehen außen liegenden Rückschlußelements (36) befestigt ist.

11. Elektrische Antriebseinheit nach einem oder mehreren der Ansprüche 1,2,3,5,6 oder 9,
**dadurch gekennzeichnet, daß**
in dem Polgehäuse (10) das Rückschlußelement (36) durch Formschluß im Kunststoff des Polgehäuses (10) und durch Kraftschluß des radial gesehen innen liegenden Magneten (32) befestigt ist.

12. Elektrische Antriebseinheit nach einem oder mehreren der Ansprüche 1 bis 4 oder 7,
**dadurch gekennzeichnet,**
**daß** das Lagerschild (43) mit dem Motorlager (45) einteilig ausgebildet ist, und
**daß** das Lagerschild (43) in das Polgehäuse (10) einsetzbar ist.

13. Elektrische Antriebseinheit nach einem oder mehreren der Ansprüche 1 bis 4, 7 oder 12,
**dadurch gekennzeichnet,**
**daß** der Rotor (20) eine axiale Längsachse (30) hat, und
**daß** am Polgehäuse (10) das Lagerschild (43) für den Rotor (20) zur Ankerlängsspieleinstellung axial positionierbar angeordnet ist.

14. Elektrische Antriebseinheit nach Anspruch 13,
**dadurch gekennzeichnet, daß**
das Lagerschild (43) durch Klebung am Polgehäuse (10) befestigt ist.

15. Elektrische Antriebseinheit nach Anspruch 13 oder 14,
**dadurch gekennzeichnet, daß**
das Lagerschild (43) durch Ultraschallschweißen am Polgehäuse (10) befestigt ist.

16. Elektrische Antriebseinheit nach einem oder mehreren der Ansprüche 13 bis 15,
**dadurch gekennzeichnet, daß**
das Lagerschild (43) durch eine Wärmebehandlung am Polgehäuse (10) befestigt ist.

17. Elektrische Antriebseinheit nach einem oder mehreren der vorherigen Ansprüche,
**dadurch gekennzeichnet,**
**daß** die Welle (28) dem Getriebegehäuse (5) zugewandt in einem Ankerlager (48) gelagert ist, das in den Kunststoff des Polgehäuses (10) eingespritzt ist.

## Claims

1. Electric drive unit (1), in particular for drives in a motor vehicle,
comprising an electric motor (15) which has a rotor (20) with a shaft (28) and has a pole housing (10),
with the pole housing (10) containing at least one magnet (32) and a magnetic return path element (36),
comprising an end plate (43) which contains a motor support (45) for the rotor (20),
comprising a single- or multi-part gear mechanism housing (5) which is connected to the pole housing (10),
with the pole housing (10) being integral with at least one part of the gear mechanism housing (5),
**characterized**
**in that** the end plate (43) is part of the pole housing (10), and
**in that** the at least one magnet (32) rests at least partly directly on the pole housing (10) and is held at least partly directly by the pole housing (10).

2. Electric drive unit according to Claim 1,
**characterized in that**
the pole housing (10) is at least partly composed of plastic.

3. Electric drive unit according to Claim 1 or 2,
**characterized in that**
the at least one magnet (32) is at least partly injected into the pole housing (10).

4. Electric drive unit according to one or more of Claims 1 to 3,
**characterized in that**
the magnetic return path element (36) which forms a magnetic return path for the at least one magnet (32) is at least partly injected into the pole housing (10).

5. Electric drive unit according to one or both of Claims 1 and 4,
**characterized in that**
the magnetic return path element (36) comprises at least two shells.

6. Electric drive unit according to one or both of Claims 1 and 4,
**characterized in that**
the magnetic return path element (36) is of integral design.

7. Electric drive unit according to one or more of Claims 1, 2 and 4 to 6,
**characterized in that**
the magnetic return path element (36), which comprises a mixture of plastic and magnetically permeable material, is injected into the pole housing (10).

8. Electric drive unit according to one or more of Claims 4 to 7,
**characterized in that**
the magnetic return path element (36) has a projection (65) which is surrounded by the plastic of the pole housing (10).

9. Electric drive unit according to Claim 1 or 3,
**characterized in that**
the at least one magnet (32) has a projection (60) which is surrounded by the plastic of the pole housing (10).

10. Electric drive unit according to one or more of Claims 1, 2 and 4 to 8,
**characterized in that**
the at least one magnet (32) is fixed in the pole housing (10) by an interlocking connection in the plastic of the pole housing (10) and by a force-fitting connection of the magnetic return path element (36) which is on the outside when viewed in the radial direction.

11. Electric drive unit according to one or more of Claims 1, 2, 3, 5, 6 and 9,
**characterized in that**
the magnetic return path element (36) is fixed in the pole housing (10) by an interlocking connection in the plastic of the pole housing (10) and by a force-fitting connection of the magnet (32) which is on the inside when viewed in the radial direction.

12. Electric drive unit according to one or more of Claims 1 to 4 and 7,
**characterized**
**in that** the end plate (43) is integrally formed with the motor support (45), and
**in that** the end plate (43) can be inserted into the pole housing (10).

13. Electric drive unit according to one or more of Claims 1 to 4, 7 and 12,
**characterized**
**in that** the rotor (20) has an axial longitudinal axis (30), and
**in that** the end plate (43) for the rotor (20) is arranged on the pole housing (10) such that it can be axially positioned for the purpose of setting the longitudinal play of the armature.

14. Electric drive unit according to Claim 13,
**characterized in that**
the end plate (43) is fixed to the pole housing (10) by adhesive bonding.

15. Electric drive unit according to Claim 13 or 14,
**characterized in that**
the end plate (43) is fixed to the pole housing (10) by ultrasonic welding.

16. Electric drive unit according to one or more of Claims 13 to 15,
**characterized in that**
the end plate (43) is fixed to the pole housing (10) by heat treatment.

17. Electric drive unit according to one or more of the preceding claims,
**characterized in that**
the shaft (28) is mounted, such that it faces the gear mechanism housing (5), in an armature support (48) which is injected into the plastic of the pole housing (10).

## Revendications

1. Unité d'entraînement électrique 1 notamment pour entraîner un véhicule automobile comprenant :
un moteur électrique 15 dont le rotor 20 comporte un arbre 28 et un boîtier polaire 10, avec au moins un aimant 32 et un élément de retour de flux 36,
un panneau de palier 43 avec le palier de moteur 45 pour le rotor 20, un boîtier de transmission 5 en une ou plusieurs parties reliées au boîtier polaire 10,
le boîtier polaire 10 faisant corps avec au moins une partie du boîtier de transmission 5,
**caractérisée en ce que**
le panneau de palier 43 est une partie du boîtier polaire 10, et
au moins un aimant 32 est appliqué au moins en partie directement contre le boîtier polaire 10 et il est tenu au moins en partie indirectement par le boîtier polaire 10.

2. Unité d'entraînement électrique selon la revendication 1,
**caractérisée en ce que**
le boîtier polaire 10 est au moins en partie en matière plastique.

3. Unité d'entraînement électrique selon l'une quelconque des revendications 1 ou 2,
**caractérisée en ce qu'**
au moins un aimant 32 est au moins en partie surmoulé par injection dans le boîtier polaire 10.

4. Unité d'entraînement électrique selon l'une quelconque des revendications 1 à 3,
**caractérisée en ce que**
l'élément de retour de flux 36 formant le chemin de retour de flux pour au moins un aimant 32 est au moins en partie surmoulé par injection dans le boîtier polaire 10.

5. Unité d'entraînement électrique selon l'une quelconque des revendications 1 ou 4,
**caractérisée en ce que**
l'élément de retour de flux 36 est formé d'au moins deux coquilles.

6. Unité d'entraînement électrique selon l'une quelconque des revendications 1 ou 4,
**caractérisée en ce que**
l'élément de retour de flux 36 est en une seule pièce.

7. Unité d'entraînement électrique selon l'une quelconque des revendications 1, 2 ou 4 à 6,
**caractérisée en ce que**
l'élément de retour de flux 36 formé d'un mélange de matière plastique et de matière conductrice d'aimantation est injecté dans le boîtier polaire 10.

8. Unité d'entraînement électrique selon l'une quelconque des revendications 4 à 7,
**caractérisée en ce que**
l'élément de retour de flux 36 comporte une partie en saillie 65 entourée par la matière plastique du boîtier polaire 10.

9. Unité d'entraînement électrique selon l'une quelconque des revendications 1 ou 3,
**caractérisée en ce qu'**
au moins un aimant 32 comporte une partie en saillie 60 entourée par la matière plastique du boîtier polaire 10.

10. Unité d'entraînement électrique selon l'une quelconque des revendications 1, 2 ou 4 à 8,
**caractérisée en ce que**
le boîtier polaire 10 d'au moins un aimant 32 est fixé par une liaison par la forme dans la matière plastique du boîtier polaire 10 et par une liaison par la force par l'élément de retour de flux 36 situé radialement à l'extérieur.

11. Unité d'entraînement électrique selon l'une quelconque des revendications 1, 2, 3, 5, 6 ou 9,
**caractérisée en ce que**
l'élément de retour de flux 36 est fixé dans le boîtier polaire 10 par une liaison par la forme en matière plastique du boîtier polaire 10 et par une liaison par la force de l'aimant 32 disposé radialement vers l'intérieur.

12. Unité d'entraînement électrique selon l'une quelconque des revendications 1, 4 ou 4,
**caractérisée en ce que**
le panneau de palier 43 est en une seule pièce avec le palier de moteur 45, et
le panneau de palier 43 se place dans le boîtier polaire 10.

13. Unité d'entraînement électrique selon l'une quelconque des revendications 1 à 4, 7 ou 12,
**caractérisée en ce que**
le rotor 20 a un axe longitudinal 30 axial, et
le panneau de palier 43 du rotor 20 est positionné axialement dans le boîtier polaire 10 pour le réglage du jeu longitudinal de l'induit.

14. Unité d'entraînement électrique la revendication 13,
**caractérisée en ce que**
le panneau de palier 43 est fixé au boîtier polaire 10 par collage.

15. Unité d'entraînement électrique selon l'une quelconque des revendications 13 ou 14,
**caractérisée en ce que**
le panneau de palier 43 est fixé au boîtier polaire 10 par soudage par ultrasons.

16. Unité d'entraînement électrique selon l'une quelconque des revendications 13 à 15,
**caractérisée en ce que**
le panneau de palier 43 est fixé au boîtier polaire 10 par traitement thermique.

17. Unité d'entraînement électrique selon l'une quelconque des revendications précédentes,
**caractérisée en ce que**
l'arbre 28 est monté dans un palier d'induit 48 tourné vers le boîtier de transmission 5, ce palier étant surmoulé par injection dans la matière plastique du boîtier polaire 10.
